# EUROPÄISCHE PATENTSCHRIFT

(11) **EP 1 785 272 B1**
(45) Veröffentlichungstag und Bekanntmachung des Hinweises auf die Patenterteilung: **14.01.2009**
(21) Anmeldenummer: 05020836.2
(22) Anmeldetag: 23.09.2005
(51) Int. Cl.: B32B 37/14, B32B 3/12

(54) **Leichtbauplatte und Verfahren zum Verarbeiten einer Leichtbauplatte**
Lightweight panel and method for manufacturing the same
Panneau léger et méthode pour sa fabrication

(43) Veröffentlichungstag der Anmeldung: 16.05.2007
(73) Patentinhaber: Homag Holzbearbeitungssysteme AG, 72296 Schopfloch (DE)
(72) Erfinder: Schmid, Johannes, 72181 Starzach-Wachendorf (DE); Gauss, Achim, 72280 Dornstetten/Hallwangen (DE)
(74) Vertreter: HOFFMANN EITLE

(56) Entgegenhaltungen:
- EP-A- 0 584 041
- EP-A- 1 223 289
- EP-A- 1 271 231
- DE-A1- 3 015 267
- US-A- 5 527 411
- US-A- 6 138 435

## Beschreibung

### Technisches Gebiet

Die Erfindung betrifft eine Leichtbauplatte mit einem plattenförmigen Werkstück, das zwei dünnwandige Decklagen und mindestens einer zwischen den Decklagen angeordneten und mit diesen verklebten Kernlage mit geringerer Dichte, vorzugsweise aus leichtem Füllmaterial aufweist, und ein Verfahren zu Verarbeiten einer Leichtbauplatte.

### Stand der Technik

Leichtbauplatten der eingangs genannten Art werden beispielsweise zur Herstellung von Zimmertüren, Möbelelementen, Paneelelementen oder dergleichen eingesetzt. Die dünnwandigen Decklagen bestehen dabei meist aus einer Furnier-, Kunststoff- oder Metallplattenlage geringer Wandstärke, die auf die Außenseite der Kernlage aus leichtem Füllmaterial aufgeklebt wird.

Unter einer derartigen Kernlage wird eine Füllmateriallage verstanden, die weitgehend aus miteinander verbundenen Stegen besteht und Hohlräume verschiedenster Form enthält. Bevorzugt sind dabei waben- oder rohrartige Strukturen, die - bezogen auf das Volumen - ein extrem niedriges Gewicht besitzen.

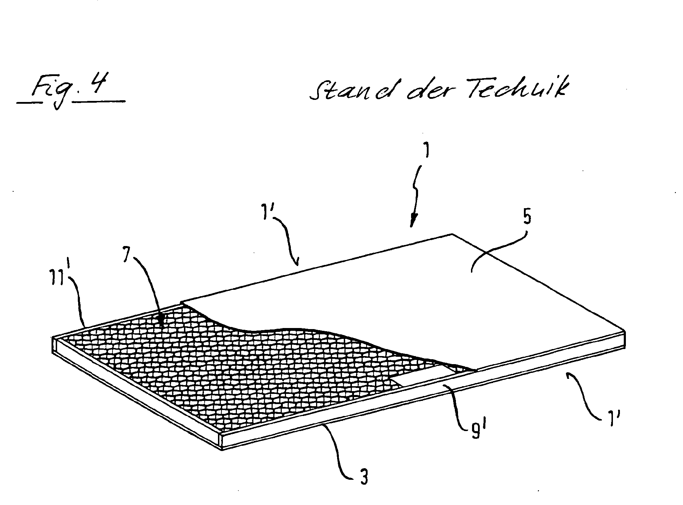

Um den Leichtbauplatten ausreichende Stabilität und einen Kantenabschluss zu verleihen, werden in den Randbereichen der Platten meist Riegel zwischen die dünnwandigen Decklagen eingebracht. Eine derartige, bekannte Leichbauplatte ist in Fig. 4 schematisch dargestellt. Ein entsprechendes Herstellungsverfahren für Leichtbauplatten ist beispielsweise in der WO 2004/085152 offenbart. Bei diesem Verfahren werden die Rahmenriegel und die Kernlage im Durchlauf auf eine dünnwandige Decklage aufgebracht, woraufhin die zweite dünnwandige Decklage aufgelegt wird. Dieses Verfahren hat sich für die Herstellung vorbestimmter Plattengeometrien als vorteilhaft erwiesen, besitzt jedoch den Nachteil, dass es eine relativ geringe Variabilität besitzt und nur schwierig auf wechselnde Anforderungen hinsichtlich der Plattenabmessungen reagiert werden kann.

Um die Variabilität zu erhöhen, ist es bekannt, großformatige plattenförmige Werkstücke mit zwei dünnwandigen Decklagen und einer Kernlage ohne Rahmenriegel vorzufertigen und bei Bedarf in entsprechenden Abmessungen zuzusägen, um abschließend Rahmenriegel an den freien Rändern der zugesägten Platten zwischen den Decklagen vorzusehen. Ein derartiges Verfahren ist beispielsweise in der Zeitschrift BM, Heft 9, 2004, S. 48 bis 49 offenbart. Bei diesem Verfahren wird die Kernlage ausgefräst, und die Rahmenriegel ("Blindkante") werden zwischen den Decklagen eingeleimt.

Allerdings hat sich gezeigt, dass der auf die Decklagen aufgebrachte Leim beim Einschieben der Rahmenriegel aufgrund der engen Abmessungstoleranzen durch die Rahmenriegel "abgezogen" wird und sich nicht angemessen auf der Verbindungsoberfläche zwischen Rahmenriegeln und Decklagen verteilt. Hierdurch ergibt sich eine unzureichende Verbindung zwischen Rahmenriegeln und Decklagen, wodurch die Stabilität und Dauerhaftigkeit der Leichtbauplatte beeinträchtigt wird.

Ferner offenbart die EP 1 223 289 A2 ein Verfahren nach dem Oberbegriff von Anspruch 1.

### Darstellung der Erfindung

Es ist daher Aufgabe der vorliegenden Erfindung, eine Leichtbauplatte mit verbesserter Stabilität und Dauerhaftigkeit sowie ein Verfahren zu deren Verarbeitung bereitzustellen.

Diese Aufgabe wird erfindungsgemäß durch ein Verfahren mit den Merkmalen von Anspruch 1 und eine Leichtbauplatte mit den Merkmalen von Anspruch 10 gelöst. Besonders vorteilhafte Weiterbildungen der Erfindung sind in den abhängigen Ansprüchen angegeben.

Der Erfindung liegt der Gedanke zugrunde, die Qualität und Gleichmäßigkeit der Leimverbindung zwischen den dünnwandigen Decklagen und dem stabförmigen Element, das beispielsweise als Rahmenriegel ausgebildet sein kann, zu verbessern. Zu diesem Zweck ist erfindungsgemäß vorgesehen, dass bei einem gattungsgemäßen Verfahren die Ausnehmung derart in das Werkstück eingebracht wird, dass die Anbringfläche mindestens eine Vertiefung aufweist.

Die Erfinder haben überraschenderweise festgestellt, dass das Vorsehen mindestens einer Vertiefung in einer Anbringfläche die Gleichmäßigkeit der Leimverteilung im Bereich der Anbringfläche deutlich verbessert, so dass sich eine erheblich bessere Verbindung zwischen den Decklagen und dem jeweiligen stabförmigen Element (insbesondere Rahmenriegel) ergibt. Auf diese Weise lässt sich durch das erfindungsgemäße Verfahren eine Leichtbauplatte mit deutlich gesteigerter Stabilität und Dauerhaftigkeit herstellen. Darüber hinaus lässt sich auch die Maßhaltigkeit der Leichtbauplatte verbessern, da der Leim zumindest teilweise in die mindestens eine Vertiefung ausweichen kann und so die Passung zwischen Riegeln und Decklagen kaum beeinträchtigt.

Dabei ist zu beachten, dass die mindestens eine Vertiefung im Rahmen der vorliegenden Erfindung zusätzlich auch im dem jeweiligen stabförmigen Element derart vorgesehen werden kann, dass sie der entsprechenden Anbringfläche zugewandt ist. Ebenso ist es im Rahmen der vorliegenden Erfindung denkbar, dass das stabförmige Element einen sich verjüngenden Querschnitt besitzt, wobei die schmalere Seite des Querschnitts auf der Innenseite der Ausnehmung angeordnet wird. Hierdurch lassen sich unterschiedlichste Hohlräume zwischen dem stabförmigen Element und den jeweiligen Decklagen zur Aufnahme und Verteilung des Haftmittels schaffen, um die oben genannten Vorteile zu erzielen bzw. zu verstärken.

Gemäß einer Weiterbildung der vorliegenden Erfindung wird in der mindestens einen Vertiefung Haftmittel vorgesehen. Die mindestens eine Vertiefung dient auf diese Weise als Haftmittelreservoir, durch welches das Haftmittel beim Einführen eines stabförmigen Elements in die jeweilige Ausnehmung mit Haftmittel bestrichen wird, sodass sich eine gleichmäßige Verteilung des Haftmittels ergibt.

Die mindestens eine Vertiefung kann im Rahmen der vorliegenden Erfindung auf unterschiedlichste Art und Weise vorgesehen sein. Gemäß einer Weiterbildung der vorliegenden Erfindung ist jedoch vorgesehen, dass die mindestens eine Vertiefung mindestens eine Längsnut umfasst, die sich in der Längsrichtung des stabförmigen Elements kontinuierlich oder diskontinuierlich erstreckt. Hierdurch wird sichergestellt, dass das stabförmige Element entlang seiner gesamten Länge in ausreichendem Maße mit Haftmittel versehen wird, sodass die Stabilität und Dauerhaftigkeit der hergestellen Leichtbauplatte weiter gesteigert werden kann.

Alternativ oder zusätzlich ist gemäß einer Weiterbildung der Erfindung vorgesehen, dass die mindestens eine Vertiefung in der Richtung des Einführens des stabförmigen Elements mit einer zunehmenden Tiefe und bevorzugt danach mit einer abnehmenden Tiefe vorgesehen wird. Hierdurch ergibt sich, wie Versuche gezeigt haben, ein besonders geeignetes Reservoir für das Haftmittel, das einen guten Verbund zwischen den dünnwandigen Decklagen und dem jeweiligen stabförmigen Element ermöglicht.

Um zusätzlich zu der Haftverbindung zwischen den dünnwandigen Decklagen und dem jeweiligen stabförmigen Element auch einen guten Formschluss zwischen diesen Bauteilen zu erzielen, ist gemäß einer Weiterbildung der vorliegenden Erfindung vorgesehen, dass die Anbringfläche benachbart zum freien Rand des Werkstücks und/oder benachbart zu der Kernlage einen Bereich aufweist, der frei von Vertiefungen ist. An diesem vertiefungsfreien Bereich kann das jeweilige stabförmige Element flächig anliegen, sodass es stabil gehalten wird und sich eine innige Verbindung ergibt.

In diesem Zusammenhang ist gemäß einer Weiterbildung der vorliegenden Erfindung vorgesehen, dass die Anbringfläche derart ausgebildet wird, dass sie aus dem Bereich der mindestens einen Vertiefung mit geringem Spiel an dem stabförmigen Element anliegt. Dabei ergibt sich eine besonders stabile und dauerhafte Leichtbauplatte, wenn die Anbringfläche an dem stabförmigen Element im Presssitz anliegt.

Im Rahmen der vorliegenden Erfindung ist es prinzipiell möglich, die als Ausgangsmaterial dienenden, plattenförmigen Werkstücke von vornherein in einer gewünschten Größe vorzufertigen. Ein besonders wirtschaftliches Verfahren erhält man jedoch, wenn die plattenförmigen Werkstücke gemäß einer Weiterbildung der vorliegenden Erfindung großformatig vorproduziert werden, und anschließend die jeweiligen plattenförmigen Werkstücke mit der gewünschten Größe aus dem großformatigen plattenförmigen Werkstück herausgesägt werden.

Gemäß einer weiteren Zielrichtung stellt die vorliegende Erfindung eine Leichtbauplatte mit den Merkmalen von Anspruch 10 bereit, die durch das Vorsehen mindestens einer Vertiefung in einer Anbringfläche eine sehr hohe Stabilität und Dauerhaftigkeit besitzt. Vorteilhafte Ausgestaltungen dieser Leichtbauplatte sind in den Ansprüchen 11 bis 17 definiert, wobei im Hinblick auf die hierdurch erzielten Vorteile und Wirkungen auf die obigen Ausführungen verwiesen werden kann.

### Kurze Beschreibung der Zeichnungen

- Fig. 1: zeigt schematisch eine Schnittansicht einer Leichtbauplatte gemäß einer ersten Ausführungsform der vorliegenden Erfindung;
- Fig. 2: zeigt schematisch eine Schnittansicht einer Leichtbauplatte gemäß einer zweiten bevorzugten Ausführungsform der vorliegenden Erfindung;
- Fig. 3: zeigt schematisch eine Schnittansicht einer Leichtbauplatte gemäß einer dritten bevorzugten Ausführungsform der vorliegenden Erfindung.
- Fig. 4: zeigt schematisch eine Perspektivansicht einer vorbekannten Leichbauplatte.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

Der prinzipielle Aufbau einer bekannten Leichtbauplatte 1, auf welche die vorliegende Erfindung aufbaut, ist in Fig. 4 schematisch in einer Perspektivansicht dargestellt. Die Leichtbauplatte 1 umfasst zwei dünnwandige Decklagen 3, 5, die beispielsweise aus Holz, Holzaustauschstoffen, Kunststoff, Metall oder anderen geeigneten Materialien bestehen können. Die Decklagen können auch mehrschichtig ausgebildet sein. Zwischen den dünnwandigen Decklagen 3, 5 ist eine Kernlage 7 mit geringerer Dichte, vorzugsweise aus leichtem Füllmaterial angeordnet und mit den Decklagen verklebt. Die Kernlage 7 besitzt in der vorliegenden Ausführungsform eine wabenartige Struktur und wird in den meisten Anwendungsfällen einen hohen Hohlraumanteil besitzen, obgleich die vorliegende Erfindung nicht hierauf beschränkt ist. Vielmehr kann die Kernlage auch aus einem gleichen oder ähnlichen Material wie die Decklagen bestehen und lediglich eine geringere Dichte besitzen. Unter dieser Voraussetzung ist auch eine integrale Ausbildung von Decklagen und Kernlage möglich.

An den freien Rändern 1' besitzt die Leichtbauplatte 1 zwischen den Decklagen 3, 5 jeweils Rahmenriegel 9' die beispielsweise aus Holz, Holzaustauschstoffen, Kunststoff, Metall oder dergleichen bestehen und mit den dünnwandigen Decklagen 3, 5 über ein Haftmittel verbunden sind.

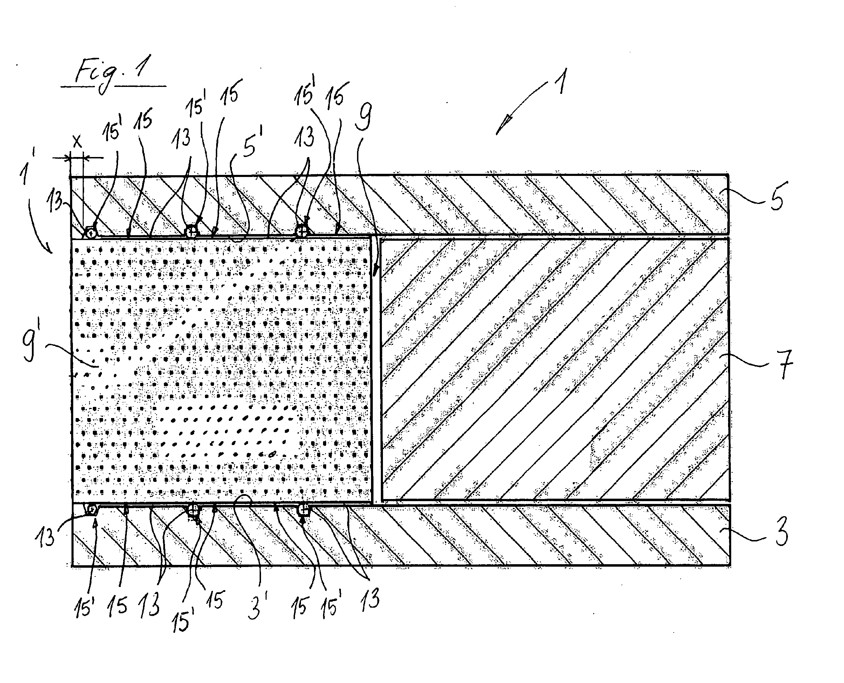

Die vorliegende Erfindung befasst sich insbesondere mit der Ausbildung der Verbindungen der Riegel 9' mit den dünnwandigen Decklagen 3, 5 im Bereich einer Anbringfläche. Eine erste bevorzugte Ausführungsform der vorliegenden Erfindung ist in Fig. 1 schematisch in einer Schnittansicht dargestellt. Die in Fig. 1 teilweise gezeigte Leichtbauplatte 1 basiert auf der in Fig. 4 gezeigten Leichtbauplatte, sodass auf eine wiederholte Beschreibung gleicher Bauteile verzichtet wird und nur die Unterschiede zum Stand der Technik herausgearbeitet werden.

Wie in Fig. 1 zu erkennen ist, weisen die dünnwandigen Decklagen 3, 5 auf ihrer Innenseite jeweils eine Anbringfläche 3', 5' auf, die dazu vorgesehen ist, mit dem jeweiligen Riegel 9' über ein Haftmittel 13 verbunden zu werden. In jeder der Anbringflächen 3', 5' sind in der vorliegenden Ausführungsform drei Längsnuten 15' vorgesehen, die sich in der Längsrichtung des Riegels 9' (d.h. senkrecht zur Zeichenebene in Fig. 1) erstrecken. Dabei können die Längsnuten 15' kontinuierlich oder diskontinuierlich ausgebildet sein. Zwischen bzw. neben den Längsnuten 15' sind Vertiefungen 15 vorgesehen, die eine geringere Tiefe als die Längsnuten 15' besitzen. In der vorliegenden Ausführungsform besitzt nur der mit X gekennzeichnete Bereich der Anbringflächen 3', 5' keinerlei Vertiefungen 15 oder 15'. Dabei ist der Bereich X derart ausgelegt, dass er an dem Riegel 9' anliegt, und zwar bevorzugt im Presssitz.

In den Vertiefungen 15 und den Längsnuten 15' ist ein Haftmittel 13 vorgesehen, bei dem es sich beispielsweise um einen EVA-, PVAc- oder PU-Klebestoff handeln kann.

Die Herstellung der in Fig. 1 gezeigten Leichtbauplatte vollzieht sich beispielsweise wie folgt. Zunächst wird ein plattenförmiges Werkstück bereitgestellt, das zwei dünnwandige Decklagen 3, 5 und eine zwischen diesen angeordnete und mit diesen verklebte Kernlage 7 aus leichtem Füllmaterial umfasst. Dieses plattenförmige Werkstück kann einerseits von vornherein mit den gewünschten Abmessungen gefertigt werden, oder kann aus einem großformatigen Werkstück mit den gewünschten Abmessungen herausgesägt werden.

Anschließend wird eine Ausnehmung 9 in eine Schmalfläche 1' bzw. in alle Schmalflächen 1' des plattenförmigen Werkstücks eingebracht, beispielsweise durch Fräsen. Dabei reicht die Ausnehmung 9 in der vorliegenden Ausführungsform sowohl in die Kernlage 7 als auch in die beiden dünnwandigen Decklagen 3, 5 hinein und wird derart vorgesehen, dass die Anbringflächen 3', 5' jeweils mit den Vertiefungen 15 und Längsnuten 15' ausgestattet sind.

Nun wird das Haftmittel 13 zumindest in den Längsnuten 15' vorgesehen, die in der vorliegenden Ausführungsform als "Haftmittelreservoir" dienen, um anschließend den jeweiligen Riegel 9' in die Ausnehmung 9 einzuführen, und zwar in Fig. 1 in einer Richtung von links nach rechts. Dabei streicht die Oberfläche des Riegels 9' an dem Haftmittel 13 entlang, das zumindest in den Längsnuten 15' vorgesehen ist. Auf diese Weise wird die Oberfläche des Riegels 9' mit dem Haftmittel 13 bestrichen, sodass sich eine gleichmäßige Haftmittelverteilung zwischen dem Riegel 9 und den dünnwandigen Decklagen 3, 5 im Bereich der Anbringfläche 3', 5' ergibt. Darüber hinaus stellt sich auch ein Formschluss zwischen ausgehärtetem Haftmittel und dünnwandigen Decklagen ein, was die Festigkeit der Haftverbindungen weiter verbessert. Hierdurch ergibt sich in Kombination mit dem bevorzugten Presssitz im Bereich X eine besonders stabile, maßhaltige und dauerhafte Leichtbauplatte.

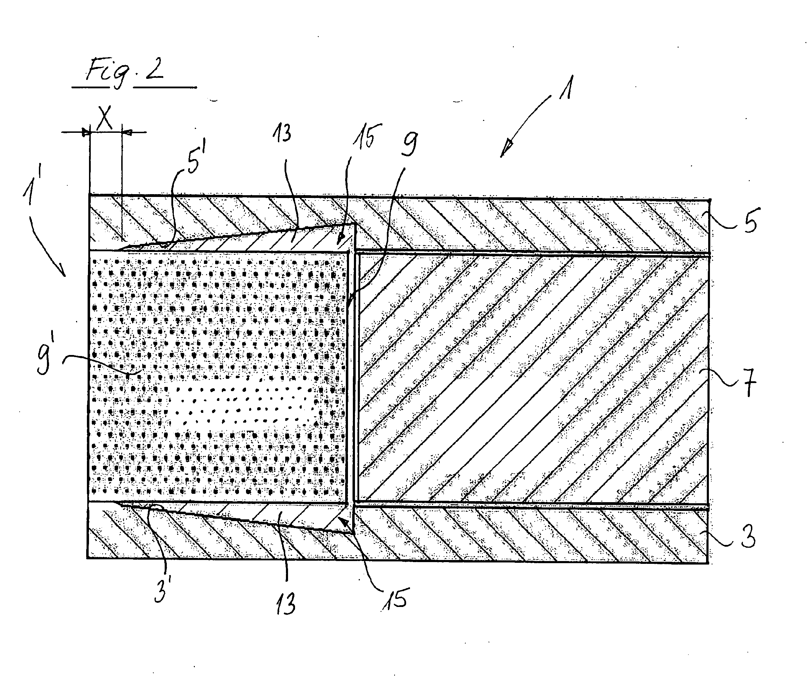

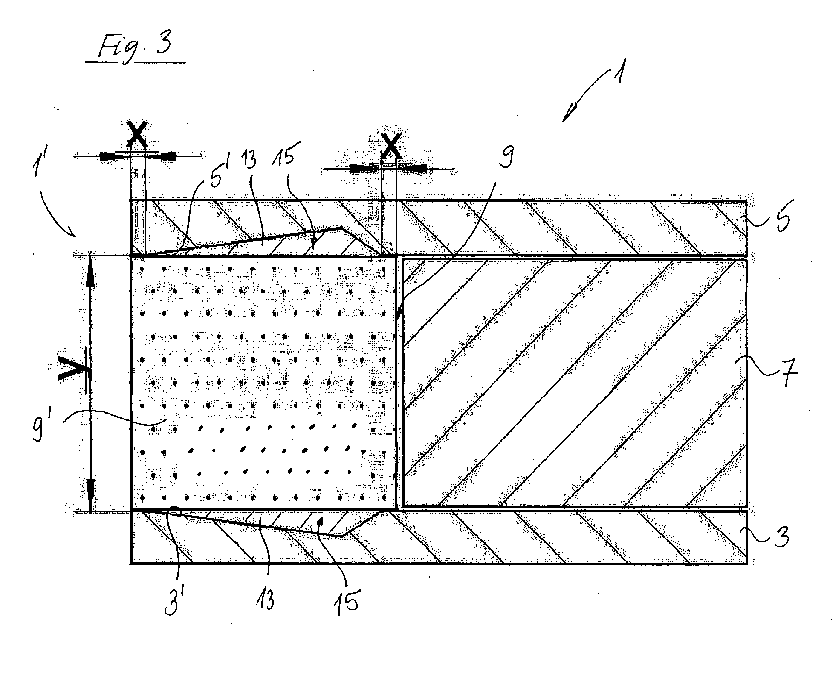

Eine zweite bevorzugte Ausführungsform der erfindungsgemäßen Leichtbauplatte 1 ist in Fig. 2 ebenfalls in einer teilweisen Schnittansicht dargestellt. Die in Fig. 2 gezeigte Ausführungsform unterscheidet sich von der in Fig. 1 gezeigten Ausführungsform durch die Ausgestaltung der Vertiefungen 15. Diese sind in der vorliegenden Ausführungsform derart ausgebildet, dass sie in der Richtung des Einführens des Riegels 9' keilförmig mit einer zunehmenden Tiefe ausgebildet sind, wobei die vorliegende Erfindung nicht auf eine Keilform beschränkt ist und vielfältige Formen mit kontinuierlich oder diskontinuierlich zunehmender Tiefe möglich sind. Dabei ist zu beachten, dass die Vertiefungen 15 in Fig. 2 (und ebenso in der nachfolgenden Fig. 3) stark überhöht dargestellt ist.

Die Vertiefungen 15 erstrecken sich ausgehend von einem Bereich X, der frei von Vertiefungen ist und dazu vorgesehen ist, an einer ebenfalls vertiefungsfreien Oberfläche des Riegels 9' anzuliegen, und zwar mit geringem Spiel, insbesondere im Presssitz.

Die Vertiefungen 15 sind in der vorliegenden Ausführungsform im Wesentlichen vollständig mit Haftmittel gefüllt, obgleich sie im Rahmen der vorliegenden Erfindung auch nur teilweise mit Haftmittel gefüllt sein können. Durch das in den Vertiefungen 15 vorgesehene Haftmittel ergibt sich nicht nur eine gleichmäßige, sondern auch eine formschlüssig wirkende Haftmittelverbindung zwischen dem Riegel 9' und den dünnwandigen Decklagen 3, 5. Ferner sorgt der vertiefungsfreie Bereich X, der bevorzugt im Presssitz zu dem Riegel 9' ausgebildet ist, dafür, dass der Riegel 9' schon vor dem Aushärten des Haftmittels 15 eine genau definierte Lage einnimmt, und trägt somit zu einer erhöhten Stabilität der erfindungsgemäßen Leichtbauplatte 1 bei.

Eine dritte Ausführungsform der vorliegenden Erfindung ist in Fig. 3 in einer teilweisen Schnittansicht dargestellt. Die in Fig. 3 gezeigte Ausführungsform unterscheidet sich von der in Fig. 2 gezeigten Ausführungsform zunächst dadurch, dass die Vertiefungen 15 in der Richtung des Einführens des Riegels 9', d.h. von links nach rechts in Fig. 3, zunächst mit einer zunehmenden Tiefe und danach mit einer abnehmenden Tiefe vorgesehen sind. Hierdurch vermindert sich die erforderliche Haftmittelmenge, ohne dass die Verbund- und Formschlusseigenschaften spürbar beeinträchtigt werden. Ferner ist bei der in Fig. 3 gezeigten Ausführungsform vorgesehen, dass neben dem vertiefungsfreien Bereich X an dem freien Rand der Leichtbauplatte 1 (links in Fig. 3) ein weiterer, vertiefungsfreier Bereich X vorgesehen ist, der sich benachbart zu der Kernlage 7 (rechts in Fig. 3) befindet. Hierdurch wird der Riegel 9' besonders stabil gehalten, und zwar sowohl vor als auch nach dem Aushärten des Haftmittels 15. Dabei ist es besonders bevorzugt, dass der Riegel 9' ein Passmaß Y besitzt, das derart abgestimmt ist, dass der Riegel im Presssitz an den Bereichen X der Decklagen 3, 5 anliegt.

Obgleich in den Figuren nicht gezeigt, kann in jeder der vorstehend diskutierten Ausführungsformen alternativ oder zusätzlich zu den Vertiefungen in den dünnwandigen Decklagen auch in dem jeweiligen Riegel 9' eine in den Figuren nicht gezeigte Vertiefung vorgesehen sein, die der entsprechenden Anbringfläche 3', 5' zugewandt ist und dieselben Wirkungen erzielen kann, wie sie obenstehend beschrieben worden sind. Alternativ oder zusätzlich können die jeweiligen Riegel 9' auch einen sich verjüngenden Querschnitt besitzen, wobei die schmalere Seite des Querschnitts in diesem Falle auf der Innenseite der Ausnehmung 9 angeordnet wird.

## Patentansprüche

1. Verfahren zum Verarbeiten einer Leichtbauplatte (1), mit den Schritten:
Bereitstellen eines plattenförmigen Werkstücks mit zwei dünnwandigen Decklagen (3, 5) und mindestens einer zwischen den Decklagen angeordneten und mit diesen verklebten Kernlage (7) mit geringerer Dichte, vorzugsweise aus leichtem Füllmaterial,
Einbringen einer Ausnehmung (9) in eine Schmalfläche (1') des plattenförmigen Werkstücks, die in die mindestens eine Kernlage (7) und in mindestens eine dünnwandige Decklage (3, 5) hineinreicht, wodurch an mindestens einer dünnwandigen Decklage (3, 5) eine Anbringfläche (3', 5') zum Anbringen eines stabförmigen Elements (9') definiert wird,
Vorsehen eines Haftmittels (13) auf der mindestens einen Anbringfläche (3', 5'),
Einführen des stabförmigen Elements (9') in die Ausnehmung (9) derart, dass es mit dem plattenförmigen Werkstück im Bereich der Anbringfläche (3', 5') über das Haftmittel (13) verbunden wird,
**dadurch gekennzeichnet, dass**
die Ausnehmung (9) derart in das Werkstück eingebracht wird, dass die Anbringfläche (3', 5') mindestens eine Vertiefung (15, 15') aufweist.

2. Verfahren zum Verarbeiten einer Leichtbauplatte nach Anspruch 1, **dadurch gekennzeichnet, dass** in das stabförmige Element mindestens eine Vertiefung eingebracht wird, die der Anbringfläche zugewandt ist.

3. Verfahren zum Verarbeiten einer Leichtbauplatte nach Anspruch 1 oder 2, **dadurch gekennzeichnet, dass** in der mindestens einen Vertiefung (15, 15') Haftmittel (13) vorgesehen wird.

4. Verfahren zum Verarbeiten einer Leichtbauplatte nach einem der vorhergehenden Ansprüche, **dadurch gekennzeichnet, dass** die mindestens eine Vertiefung mindestens eine Längsnut (15') umfasst, die sich in der Längsrichtung des stabförmigen Elements (9') kontinuierlich oder diskontinuierlich erstreckt.

5. Verfahren zum Verarbeiten einer Leichtbauplatte nach einem der vorhergehenden Ansprüche, **dadurch gekennzeichnet, dass** die mindestens eine Vertiefung (15) in der Richtung des Einführens des stabförmigen Elements (9') mit einer zunehmenden Tiefe und bevorzugt danach mit einer abnehmenden Tiefe vorgesehen wird.

6. Verfahren zum Verarbeiten einer Leichtbauplatte nach einem der vorhergehenden Ansprüche, **dadurch gekennzeichnet, dass** die Anbringfläche (3', 5') benachbart zum freien Rand des Werkstücks und/oder benachbart zu der Kernlage (7) einen Bereich (X) aufweist, der frei von Vertiefungen ist.

7. Verfahren zum Verarbeiten einer Leichtbauplatte nach einem der vorhergehenden Ansprüche, **dadurch gekennzeichnet, dass** die Anbringfläche (3', 5') derart vorgesehen wird, dass sie außer im Bereich der mindestens einen Vertiefung mit geringem Spiel, insbesondere im Presssitz, an dem stabförmigen Element (9') anliegt.

8. Verfahren zum Verarbeiten einer Leichtbauplatte nach einem der vorhergehenden Ansprüche, **dadurch gekennzeichnet, dass** das plattenförmige Werkstück bereitgestellt wird, indem es aus einem großformatigen plattenförmigen Werkstück herausgesägt wird.

9. Verfahren zum Verarbeiten einer Leichtbauplatte nach einem der vorhergehenden Ansprüche, **dadurch gekennzeichnet, dass** das stabförmige Element einen sich verjüngenden Querschnitt besitzt, wobei die schmalere Seite des Querschnitts auf der Innenseite der Ausnehmung (9) angeordnet wird.

10. Leichtbauplatte (1) mit einem plattenförmigen Werkstück, das zwei dünnwandige Decklagen (3, 5) und mindestens einer zwischen den Decklagen angeordneten und mit diesen verklebten Kernlage (7) mit geringerer Dichte, vorzugsweise aus leichtem Füllmaterial aufweist, wobei
eine Ausnehmung (9) in eine Schmalfläche (1') des plattenförmigen Werkstücks eingebracht ist, die in die mindestens eine Kernlage (7) und in mindestens eine dünnwandige Decklage (3, 5) hineinreicht, wodurch an mindestens einer dünnwandigen Decklage (3, 5) eine Anbringfläche (3', 5') zum Anbringen eines stabförmigen Elements (9') definiert wird,
ein Haftmittel (13) auf die mindestens eine Anbringfläche (3', 5') aufgetragen ist, und
ein staubförmiges Element (9') in die Ausnehmung (9) derart vorgesehen ist, dass es mit dem plattenförmigen Werkstück im Bereich der Anbringfläche (3', 5') über das Haftmittel (13) verbunden ist,
**dadurch gekennzeichnet, dass**
die in der Ausnehmung (9) vorgesehene Anbringfläche (3', 5') mindestens eine Vertiefung (15, 15') aufweist.

11. Leichtbauplatte nach Anspruch 10, **dadurch gekennzeichnet, dass** in das stabförmige Element mindestens eine Vertiefung eingebracht ist, die der Anbringfläche zugewandt ist.

12. Leichtbauplatte nach Anspruch 10 oder 11, **dadurch gekennzeichnet, dass** in der mindestens einen Vertiefung (15, 15') Haftmittel (13) vorgesehen ist.

13. Leichtbauplatte nach einem der Ansprüche 10 bis 12, **dadurch gekennzeichnet, dass** die mindestens eine Vertiefung mindestens eine Längsnut (15') umfasst, die sich in der Längsrichtung des stabförmigen Elements (9') kontinuierlich oder diskontinuierlich erstreckt.

14. Leichtbauplatte nach einem der Ansprüche 10 bis 13, **dadurch gekennzeichnet, dass** die mindestens eine Vertiefung (15) in der Richtung des Einführens des stabförmigen Elements (9') mit einer zunehmenden Tiefe und bevorzugt danach mit einer abnehmenden Tiefe vorgesehen ist.

15. Leichtbauplatte nach einem der Ansprüche 10 bis 14, **dadurch gekennzeichnet, dass** die Anbringfläche (3', 5') benachbart zum freien Rand des Werkstücks und/oder benachbart zu der Kernlage (7) einen Bereich (X) aufweist, der frei von Vertiefungen ist.

16. Leichtbauplatte nach einem der Ansprüche 10 bis 15, **dadurch gekennzeichnet, dass** die Anbringfläche (3', 5') derart vorgesehen ist, dass sie außer im Bereich der mindestens einen Vertiefung (15) mit geringem Spiel, insbesondere im Presssitz, an dem stabförmigen Element (9') anliegt.

17. Leichtbauplatte nach einem der Ansprüche 10 bis 16, **dadurch gekennzeichnet, dass** das stabförmige Element einen sich verjüngenden Querschnitt besitzt, wobei die schmalere Seite des Querschnitts auf der Innenseite der Ausnehmung (9) angeordnet ist.

## Claims

1. Method for processing a light building board (1) having the steps:
provision of a board-like workpiece having two thin-walled cover layers (3, 5) and at least one core layer (7) arranged between the cover layers and adhered to the latter and having a lower density, preferably made from light filling material,
introducing a recess (9) into a narrow surface (1') of the board-like workpiece, which extends into the at least one core layer (7) and into at least one thin-walled cover layer (3, 5), as a result of which an attachment surface (3', 5') for attachment of a rod-like element (9') is defined at least at one thin-walled cover layer (3, 5),
provision of an adhesive (13) on the at least one attachment surface (3', 5'),
introduction of the rod-like element (9') into the recess (9) such that it is joined to the board-like workpiece in the region of the attachment surface (3', 5') via the adhesive (13),
**characterised in that**
the recess (9) is introduced into the workpiece such that the attachment surface (3', 5') has at least one depression (15, 15').

2. Method for processing a light building board according to claim 1, **characterised in that** at least one depression, which is facing the attachment surface, is introduced into the rod-like element.

3. Method for processing a light building board according to claim 1 or 2, **characterised in that** adhesive (13) is provided in the at least one depression (15, 15').

4. Method for processing a light building board according to one of the preceding claims, **characterised in that** the at least one depression comprises at least one longitudinal groove (15') which extends continuously or discontinuously in the longitudinal direction of the rod-like element (9').

5. Method for processing a light building board according to one of the preceding claims, **characterised in that** the at least one depression (15) in the direction of introduction of the rod-like element (9') is provided with an increasing depth and preferably thereafter with a decreasing depth.

6. Method for processing a light building board according to one of the preceding claims, **characterised in that** the attachment surface (3', 5') has a region (X), which is free of depressions, adjoining the free edge of the workpiece and/or adjoining the core layer (7).

7. Method for processing a light building board according to one of the preceding claims, **characterised in that** the attachment surface (3', 5') is provided such that it rests against the rod-like element (9') externally in the region of the at least one depression with low clearance, in particular in a press fit.

8. Method for processing a light building board according to one of the preceding claims, **characterised in that** the board-like workpiece is provided by sawing it out from a large-format board-like workpiece.

9. Method for processing a light building board according to one of the preceding claims, **characterised in that** the rod-like element has a tapering cross-section, wherein the narrower side of the cross-section is arranged on the inner side of the recess (9).

10. Light building board (1) having a board-like workpiece which has two thin-walled cover layers (3, 5) and at least one core layer (7) arranged between the cover layers and adhered to the latter and having lower density, preferably made from light filling material, wherein
a recess (9) is introduced into a narrow surface (1') of the board-like workpiece, which extends into the at least one core layer (7) and into at least one thin-walled cover layer (3, 5), as a result of which an attachment surface (3', 5') for attachment of a rod-like element (9') is defined at least at one thin-walled cover layer (3, 5),
an adhesive (13) is applied to the at least one attachment surface (3', 5'), and
a rod-like element (9') is provided in the recess (9) such that it is joined to the board-like workpiece in the region of the attachment surface (3', 5') via the adhesive (13),
**characterised in that**
the attachment surface (3', 5') provided in the recess (9) has at least one depression (15, 15').

11. Light building board according to claim 10, **characterised in that** at least one depression, which is facing the attachment surface, is introduced into the rod-like element.

12. Light building board according to claim 10 or 11, **characterised in that** adhesive (13) is provided in the at least one depression (15, 15').

13. Light building board according to one of claims 10 to 12, **characterised in that** the at least one depression comprises at least one longitudinal groove (15') which extends continuously or discontinuously in the longitudinal direction of the rod-like element (9').

14. Light building board according to one of claims 10 to 13, **characterised in that** the at least one depression (15) in the direction of introduction of the rod-like element (9') is provided with an increasing depth and preferably thereafter with a decreasing depth.

15. Light building board according to one of claims 10 to 14, **characterised in that** the attachment surface (3', 5') has a region (X), which is free of depressions, adjoining the free edge of the workpiece and/or adjoining the core layer (7).

16. Light building board according to one of claims 10 to 15, **characterised in that** the attachment surface (3', 5') is provided such that it rests against the rod-like element (9') externally in the region of the at least one depression (15) with low clearance, in particular in a press fit.

17. Light building board according to one of claims 10 to 16, **characterised in that** the rod-like element has a tapering cross-section, wherein the narrower side of the cross-section is arranged on the inner side of the recess (9).

## Revendications

1. Procédé de fabrication d'un panneau léger (1), comprenant les étapes consistant à :
fournir une pièce d'oeuvre en forme de plaque, comprenant deux couches de couverture (3, 5) à paroi mince et au moins une couche de noyau (7), disposée entre les couches de couverture et collée à celles-ci, la couche de noyau ayant une masse volumique plus faible et étant réalisée de préférence en un matériau de remplissage léger,
ménager un évidement (9) dans une face étroite (1') de la pièce d'oeuvre en forme de plaque, l'évidement pénétrant dans la au moins une couche de noyau (7) et dans au moins une couche de couverture (3, 5) à paroi mince, faisant qu'une face d'application (3', 5'), pour le montage d'un élément (9') en forme de barre, est définie sur au moins une couche de couverture (3, 5) à paroi mince,
prévoir un moyen d'adhésion (13) sur la au moins une face d'application (3', 5'),
insérer l'élément (9') en forme de barre dans l'évidement (9), de manière qu'il soit relié à la pièce d'oeuvre en forme de plaque, dans la zone de la face d'application (3', 5'), par l'intermédiaire du moyen d'adhésion (13),
**caractérisé en ce que**
l'évidement (9) est inséré dans la pièce d'oeuvre, de manière que la face d'application (3', 5') présente au moins une cavité (15, 15').

2. Procédé de fabrication d'un panneau léger selon la revendication 1, **caractérisé en ce qu'**au moins une cavité, tournée vers la face d'application, est ménagée dans l'élément en forme de barre.

3. Procédé de fabrication d'un panneau léger selon la revendication 1 ou 2, **caractérisé en ce qu'**un moyen d'adhésion (13) est prévu dans la au moins une cavité (15, 15').

4. Procédé de fabrication d'un panneau léger selon l'une des revendications précédentes, **caractérisé en ce que** la au moins une cavité comprend au moins une rainure longitudinale (15'), s'étendant, de façon continue ou discontinue, dans la direction longitudinale de l'élément (9') en forme de barre.

5. Procédé de fabrication d'un panneau léger selon l'une des revendications précédentes, **caractérisé en ce que** la au moins une cavité (15) est prévue avec une profondeur allant en augmentant en évoluant dans la direction de l'insertion de l'élément (9') en forme de barre, et, de préférence, avec une profondeur qui diminue ensuite.

6. Procédé de fabrication d'un panneau léger selon l'une des revendications précédentes, **caractérisé en ce que** la face d'application (3', 5') présente, au voisinage du bord libre de la pièce d'oeuvre et/ou au voisinage de la couche de noyau (7), une zone (X) exempte de cavités.

7. Procédé de fabrication d'un panneau léger selon l'une des revendications précédentes, **caractérisé en ce que** la face d'application (3', 5') est prévue de manière que, hormis dans la zone de la au moins une cavité, elle appuie avec un faible jeu, en particulier dans un ajustement avec serrage, sur l'élément (9') en forme de barre.

8. Procédé de fabrication d'un panneau léger selon l'une des revendications précédentes, **caractérisé en ce que** la pièce d'oeuvre en forme de plaque est fournie en l'extrayant par sciage, à partir d'une pièce d'oeuvre en forme de plaque de grand format.

9. Procédé de fabrication d'un panneau léger selon l'une des revendications précédentes, **caractérisé en ce que** l'élément en forme de barre présente une section transversale allant en s'effilant, le côté plus étroit de la section transversale étant disposé sur la face intérieure de l'évidement (9).

10. Panneau léger (1) avec une pièce d'oeuvre en forme de plaque, présentant deux couches de couverture (3, 5) à paroi mince et au moins une couche de noyau (7), disposée entre les couches de couverture et collée à celles-ci, la couche de noyau ayant une masse volumique plus faible et étant réalisée de préférence en un matériau de remplissage léger,
un évidement (9) étant ménagé dans une face étroite (1') de la pièce d'oeuvre en forme de plaque, l'évidement pénétrant dans la au moins une couche de noyau (7) et dans au moins une couche de couverture (3, 5) à paroi mince, faisant qu'une face d'application (3', 5'), pour le montage d'un élément (9') en forme de barre, est définie sur au moins une couche de couverture (3, 5) à paroi mince,
un moyen d'adhésion (13) est appliqué sur la au moins une face d'application (3', 5'),
un élément (9') en forme de barre est prévu dans l'évidement (9), de manière qu'il soit relié à la pièce d'oeuvre en forme de plaque, dans la zone de la face d'application (3', 5'), par l'intermédiaire du moyen d'adhésion (13),
**caractérisé en ce que**
la face d'application (3', 5') prévue dans l'évidement (9) présente au moins une cavité (15, 15').

11. Panneau léger selon la revendication 10, **caractérisé en ce qu'**au moins une cavité, tournée vers la face d'application, est ménagée dans l'élément en forme de barre.

12. Panneau léger selon la revendication 10 ou 11, **caractérisé en ce qu'**un moyen d'adhésion (13) est prévu dans la au moins une cavité (15, 15')

13. Panneau léger selon l'une des revendications 10 à 12, **caractérisé en ce que** la au moins une cavité comprend au moins une rainure longitudinale (15'), s'étendant, de façon continue ou discontinue, dans la direction longitudinale de l'élément (9') en forme de barre.

14. Panneau léger selon l'une des revendications 10 à 13, **caractérisé en ce que** la au moins une cavité (15) est prévue avec une profondeur allant en augmentant en évoluant dans la direction de l'insertion de l'élément (9') en forme de barre, et, de préférence, avec une profondeur qui diminue ensuite.

15. Panneau léger selon l'une des revendications 10 à 14, **caractérisé en ce que** la face d'application (3', 5') présente, au voisinage du bord libre de la pièce d'oeuvre et/ou au voisinage de la couche de noyau (7), une zone (X) exempte de cavités.

16. Panneau léger selon l'une des revendications 10 à 15, **caractérisé en ce que** la face d'application (3', 5') est prévue de manière que, hormis dans la zone de la au moins une cavité (15), elle appuie avec un faible jeu, en particulier dans un ajustement avec serrage, sur l'élément (9') en forme de barre.

17. Panneau léger selon l'une des revendications 10 à 16, **caractérisé en ce que** l'élément en forme de barre présente une section transversale allant en s'effilant, le côté plus étroit de la section transversale étant disposé sur la face intérieure de l'évidement (9).
